# EUROPEAN PATENT APPLICATION

(11) **EP 3 252 958 A1**
(43) Date of publication of application: **06.12.2017**
(21) Application number: 15879944.5
(22) Date of filing: 29.01.2015
(51) Int. Cl.: H04B 1/38, E02F 9/00, G06K 7/10

(54) **IDENTIFICATION INFORMATION ACQUISITION SYSTEM AND WORKING VEHICLE**

(71) Applicant: Komatsu Ltd., Minato-ku Tokyo 107-8414 (JP)
(72) Inventor: KOSHI Takayuki, Hiratsuka-shi Kanagawa 254-8555 (JP); MIZUTANI Eiji, Hiratsuka-shi Kanagawa 254-8555 (JP)
(74) Representative: Grünecker Patent- und Rechtsanwälte PartG mbB
(86) International application number: PCT/JP2015/052460
(87) International publication number: WO 2016/121047

(57) **Abstract**

A identification information acquisition system provided in a working vehicle includes: a plurality of identification devices (30A, 30B, 30C, 30D); and a plurality of communication devices (15) that communicate with the plurality of identification devices (30A, 30B, 30C, 30D). The plurality of communication devices (15) include a first communication device (15A) and a second communication device (15B), an operation of which is controlled by the first communication device (15A). The first communication device (15A) is disposed at a first position and the second communication device (15B) is disposed at a second position in a working vehicle, a temperature at the first position being lower than a temperature at the second position.

## Description

### TECHNICAL FIELD

The present invention relates to an identification information acquisition system and a working vehicle provided with the identification information acquisition system.

### BACKGROUND ART

A construction machine (e.g., a hydraulic excavator and a wheel loader), a delivery vehicle (e.g., a dump truck) and the like are typically known as a working vehicle. There is known technology of attaching an IC chip (identification part) to a replacement part (e.g., a filter) installed in such a working vehicle, reading information stored in the IC chip using a sensor, and identifying the replacement part as a genuine part or an imitation (see, for instance, Patent Literature 1).

In a replacement parts identification device disclosed in Patent Literature 1, the IC chip (identification part) is embedded in a genuine replacement part warranted by a manufacturer of a construction machine and a reader (sensor) is positioned so as to detect needed information stored in the IC chip. When an abnormality detection signal to be outputted when the needed information is not detected is outputted from the sensor, a controller stops an operation of an engine and/or displays an alarm message on a monitor.

When a signal indicating replacement by another genuine filter is outputted from the sensor, the controller stores an attachment timing of the filter and calculates a next replacement timing to notify an operator of the replacement timing. Further, the controller stores presence or absence of the replacement of the genuine filter and the number of times of the replacement.

Here, when a plurality of IC chips described above are provided, the IC chips are possible to be disposed out of a range of electric waves receivable by the reader (sensor). Particularly, since a relatively large structure body (e.g., engine) is disposed in the working vehicle, the electric waves are likely to be blocked by such a structure body to narrow the above receivable range. Accordingly, in some cases, information from the plurality of IC chips cannot be appropriately acquired by a single sensor.

To cope with this problem, an arrangement of including a plurality of inquiry devices (readers) that each receive information from response devices (IC tags) is known (see, for instance, Patent Literature 2).

In the arrangement of Patent Literature 2, the plurality of inquiry devices each capable of receiving the information from the response devices are disposed so that respective recognition areas of the inquiry devices are set to be mutually close. Here, at least two of the plurality of inquiry devices are possibly to receive response signals from the response devices not only in the recognition areas of the at least two of the plurality of inquiry devices but also in the other recognition areas. Thus, the inquiry devices transmit inquiry signals at different transmission timings. A difference between the transmission timings is set at a time equal to or more than a time required for each of the inquiry devices to be activated by receiving the inquiry signal and transmit the response signal. With this arrangement, each of the inquiry devices can receive the response signal in response to its own inquiry signal from the response device located within its own recognition area.

Patent Literature 2 discloses that one of the inquiry devices is a master device and is synchronized with the other inquiry devices.

### CITATION LIST

### PATENT LITERATURE(S)

Patent Literature 1: JP-A-2005-273196
Patent Literature 2: JP-A-2008-182566

### SUMMARY OF THE INVENTION

### PROBLEM(S) TO BE SOLVED BY THE INVENTION

There are places to be likely to be heated to a relatively high temperature within the working vehicle. For instance, an engine room in which an engine is provided is known for being likely to be heated to a relatively high temperature. If a master inquiry device is disposed in such an engine room, the other slave inquiry devices could not be suitably controlled when the master inquiry device is erroneously operated.

An object of the invention is to provide an identification information acquisition system and a working vehicle which are capable of suitably operating at least one of communication devices.

### MEANS FOR SOLVING THE PROBLEM(S)

According to an aspect of the invention, an identification information acquisition system provided in a working vehicle includes: a plurality of identification devices; and a plurality of communication devices that communicate with the plurality of identification devices, in which the plurality of identification devices include a first communication device and a second communication device, an operation of the second communication device being controlled by the first communication device, and the first communication device is disposed at a first position and the second communication device is disposed at a second position in the working vehicle, a temperature at the first position being lower than a temperature at the second position.

A temperature at the first position being lower than a temperature at the second position where the second communication device is disposed means a a temperature at the first position being lower than a temperature at the second position where the second communication device is disposed in a typical use of the working vehicle.

According to the above aspect of the invention, the first communication device that controls the second communication device among the plurality of communication devices is disposed at the first position where the temperature is lower than the temperature at the second position where the second communication device is disposed in the working vehicle. With this arrangement, the first communication device can be disposed at a position within an allowable temperature range and can be operated within the allowable temperature range. Accordingly, the first communication device can be appropriately operated and appropriately control the second communication device.

In the identification information acquisition system according to the above aspect of the invention, it is preferable that the working vehicle includes: an engine room in which an engine is provided; and a pump room that is separately provided from the engine room and in which a hydraulic pump is disposed, in which the first communication device is disposed in the pump room, and the second communication device is disposed in the engine room.

The hydraulic pump is exemplified by a pump that circulates oil in the engine and supplies fuel to the engine and the like.

With this arrangement, since the first communication device is disposed in the pump room and the second communication device is disposed in the engine room, the first communication device and the second communication device can communicate with the identification device attached to the components disposed in the engine room and the pump room. At this time, since the temperature in the pump room is lower than the temperature in the engine room, the first communication device can be stably operated and reliably and appropriately controls the second communication device.

The identification information acquisition system according to the above aspect of the invention preferably includes a controller that controls an operation of the first communication device, in which the first communication device includes: a judging unit that judges whether or not the second communication device is normally operated; and an operational information transmitter that transmits operational information indicating that the second communication device is not normally operated to the controller when the judging unit judges that the second communication device is not normally operated.

With this arrangement, when it is judged that the second communication device is not normally operated, the first communication device transmits the above operational information to the controller. With this arrangement, the controller can recognize the operational conditions of the second communication device based on the transmitted operational information.

The identification information acquisition system according to the above aspect of the invention preferably includes a processor that processes information acquired by the plurality of communication devices, in which the plurality of identification devices includes: a first identification device that communicates with the first communication device and holds first identification information; and a second identification device that communicates with the second communication device and holds second identification information, the first communication device including: an information holder that holds the first identification information acquired from the first identification device by the first communication device and the second identification information acquired from the second identification device by the second communication device; and an identification information transmitter that transmits the first identification information and the second identification information held by the information holder to the processor.

With this arrangement, the first communication device not only controls the second communication device but also collectively transmits the second identification information acquired by the second communication device and the first identification information acquired by the first communication device. With this arrangement, as compared with an instance where the first communication device and the second communication device respectively individually transmit the first identification information and the second identification information, a frequency of transmitting the respective identification information from the communication devices can be decreased.

According to another aspect of the invention, a working vehicle includes the identification information acquisition system according to the above aspect of the invention.

With this arrangement, the same advantages as those in the above identification information acquisition system can be attained.

According to still another aspect of the invention, a working vehicle includes: an engine room in which an engine is provided; a pump room that is separately provided from the engine room and in which a hydraulic pump is disposed, a temperature in the pump room being lower than a temperature in the engine room; a first identification device that holds first identification information; a second identification device that holds second identification information; a first communication device that is disposed in the pump room and communicates with the first identification device to acquire the first identification information; a second communication device that is disposed in the engine room and is controlled by the first communication device and communicates with the second identification device to acquire the second identification information; and a processor that controls the first communication device and processes the first identification information and the second identification information, in which the first communication device includes: a judging unit that judges whether or not the second communication device is normally operated; an operational information transmitter that transmits operational information indicating that the second communication device is not normally operated to the processor when the judging unit judges that the second communication device is not normally operated; and an identification information transmitter that transmits to the processor the first identification information acquired from the first identification device and the second identification information acquired from the second identification device by the second communication device.

With this arrangement, the same advantages as those in the above working vehicle can be attained.

### BRIEF DESCRIPTION OF DRAWING(S)

Fig. 1 is a perspective view showing a hydraulic excavator as a working vehicle according to an exemplary embodiment of the invention.
Fig. 2 is a schematic view showing an inside of a machine room.
Fig. 3 is a schematic view showing an inside of a pump room.
Fin. 4 is a schematic view showing a configuration of an IC tag.
Fig. 5 is a block diagram showing a configuration of the hydraulic excavator and an overall configuration of an identification information acquisition system.
Fig. 6 is a block diagram showing a configuration of a reader (master).
Fig. 7 is a block diagram showing a configuration of a reader (slave).
Fig. 8 is a flow chart showing an information collection process for acquiring identification information.
Fig. 9 is another flow chart showing an information acquisition process for acquiring identification information.
Fig. 10 is still another flow chart showing an information transmission process for acquiring identification information.
Fig. 11 is an illustration for describing the information collection process for acquiring identification information.
Fig. 12 is another illustration for describing the information collection process for acquiring identification information.
Fig. 13 is still another illustration for describing the information collection process for acquiring identification information.
Fig. 14 is a further illustration for describing the information collection process for acquiring identification information.

### DESCRIPTION OF EMBODIMENT(S)

An exemplary embodiment of the invention will be described below with reference to attached drawings.

### Description of Overall Hydraulic Excavator

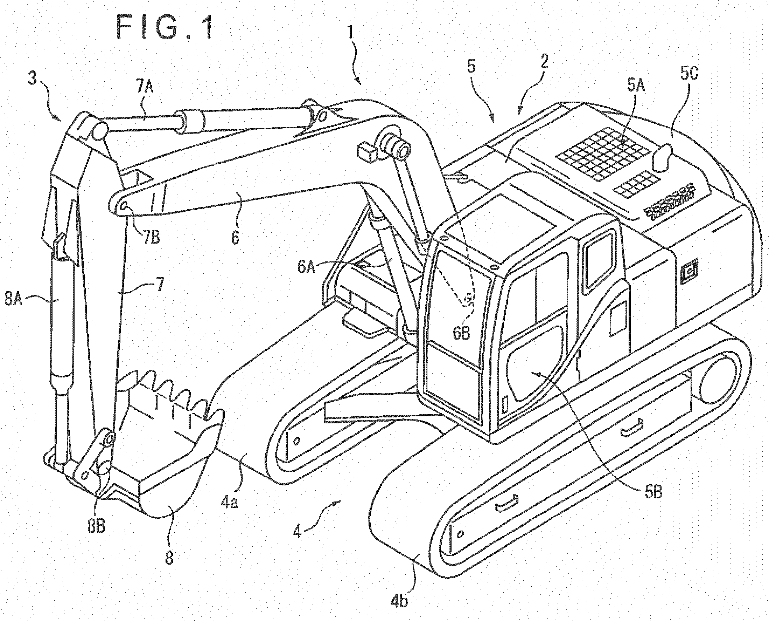

Fig. 1 is a perspective view showing a hydraulic excavator 1 as an example of a working vehicle in the exemplary embodiment.

In the exemplary embodiment, the hydraulic excavator 1 includes a vehicle body 2 and working equipment 3 as shown in Fig. 1. The vehicle body 2 includes an undercarriage 4 and an upper revolving body 5.

In the upper revolving body 5, a side where the working equipment 3 and a cab 5B are disposed is defined as a front and a side where a machine room 5A is disposed is defined as a back. A left side of the upper revolving body 5 facing the front is defined as a left and a right side of the upper revolving body 5 facing the front is defined as a right. In the hydraulic excavator 1 and the vehicle body 2, a side near the undercarriage 4 is defined as a bottom relative to the upper revolving body 5 while a side near the upper revolving body 5 is defined as a top relative to the undercarriage 4. When the hydraulic excavator I is disposed on a horizontal surface, the bottom is a side in a vertical direction, namely, a direction in which gravity acts, while the top is a side in a direction opposite the vertical direction.

In the exemplary embodiment, the hydraulic excavator I includes an internal combustion engine (e.g., a diesel engine) as a motive power generator. However, the motive power generator of the hydraulic excavator 1 is not limited to the internal combustion engine. For instance, the hydraufic excavator I may include the internal combustion engine, a generator motor and an electric storage device in combination (a so-called hybrid motive power generator). Alternatively, the hydraulic excavator 1 may include a motive power generator including a motor in place of the internal combustion engine.

### Machine Room

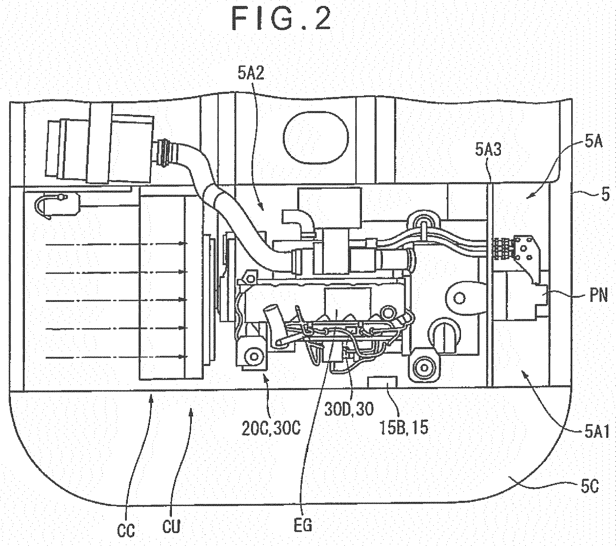

Fig. 2 is a schematic view showing the machine room 5A.

The upper revolving body 5 includes the machine room 5A, the cab 5B, and a counterweight 5C.

The machine room 5A is disposed at a first end (back side) of the upper revolving body 5. An inside of the machine room 5A is divided by a partition 5A3 into a pump room 5A1 and an engine room 5A2 as shown in Fig. 2. The pump room 5A1 is positioned on the right of the machine room 5A and the engine room 5A2 is positioned on the left of the machine room 5A, seen from the back.

### Engine Room

The engine room 5A2 contains an engine EG (motive power generator) and a cooling unit CU including a cooling core CC (e.g., radiator) and the like. The cooling unit CU is disposed adjacent to the engine EG and cools a cooling water flowing in the engine EG and a hydraulic fluid flowing in a hydraulic device (not shown).

The engine EG is disposed in a substantially sealed space defined by being surrounded by a partition in front of the counterweight 5C, a partition in front of the engine room 5A2, the partition 5A3 for separating the engine room 5A2 (left side) from the pump room 5A1 (right side), a door (not shown) on the left, a top plate including an engine hood disposed above the engine EG (not shown), and a bottom plate (not shown). Accordingly, since the engine EG is unlikely to be in touch with the outer air, an internal temperature of the engine room 5A2 is easily increased to a high temperature by heat generated by the engine EG during an operation of the engine EG. Even after the engine EG stops, the internal temperature of the engine room 5A2 is not immediately declined.

Further, in the engine room 5A2, a filter 20C (a fuel main filter), an identification device 30C, an identification device 30D attached to the engine EG, and a reader 15B that communicates with the identification devices 30C and 30D are provided. These components will be described in detail below.

The cab 5B is disposed at a second end (front side) of the upper revolving body 5 as shown in Fig. 1.

The counterweight 5C is provided on the farthest back side of the upper revolving body 5. The counterweight 5C is provided for weight balance with the working equipment 3 and is filled with weights. In other words, the machine room 5A is interposed between the cab 5B and the counterweight 5C.

The undercarriage 4 includes crawlers 4a and 4b. The undercarriage 4 is driven by a hydraulic motor (not shown) to rotate the crawlers 4a and 4b, whereby the hydraulic excavator 1 travels or is turned.

The working equipment 3 is attached to a lateral side of the cab 5B of the upper revolving body 5 and includes a boom 6, arm 7, bucket 8, boom cylinder 6A, arm cylinder 7A and bucket cylinder 8A. A base end of the boom 6 is jointed to a front of the vehicle body 2 through a boom pin 6B, whereby the boom 6 is movably attached. A base end of the arm 7 is jointed to a leading end of the boom 6 through an arm pin 7B, whereby the arm 7 is movably attached. The bucket 8 is jointed to a leading end of the arm 7 through a bucket pin 8B, whereby the bucket 8 is movably attached.

### Description of Pump Room

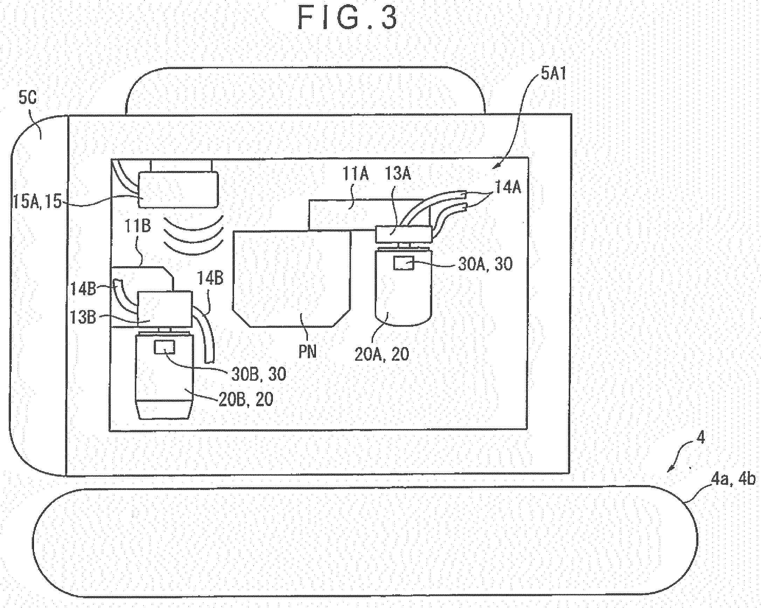

Fig. 3 is an illustration showing an inside of the pump room 5A1 with a door (not shown) opened from the right side of the upper revolving body 5. In other words, Fig. 3 is a schematic view showing an arrangement of filters 20A and 20B and a reader 15A in the pump room 5A1.

The pump room 5A1 is disposed in a substantially sealed space defined by being surrounded by a door (not shown) on the right, the counterweight 5C, a partition in front of the pump room 5A1, the partition 5A3 for separating the pump room 5A1 from the engine room 5A2, the top plate (not shown) including the engine hood disposed above the engine EG, and the bottom plate (not shown).

The pump room 5A1 houses a hydraulic pump PN as shown in Fig. 3. Unlike in the engine room 5A2, no heat source likely to heat the space to a higher temperature is provided in the pump room 5A1. In other words, the hydraulic pump PN and the like housed in the pump room 5A1 radiates less heat to the space than the engine EG. The top plate positioned immediately above the pump room 5A1 can be formed with, for instance, a slit air vent, so that heat inside the pump room 5A1 can be released from the air vent. Moreover, although the pump room 5A1 is separated from the outer air at least by the door on the right (a door positioned opposite the partition 5A3) as described above, the heat inside the pump room 5A1 can be released through the door. Furthermore, with a slit air vent provided to the door, the heat inside the pump room 5A1 can be released through the air vent and introduce the outer air into the pump room 5A1 through the air vent. In other words, the internal temperature of the space in the pump room 5A1 can be kept lower than that in the engine room 5A2.

The hydraulic pump PN housed in the pump room 5A1 is mechanically connected to the engine EG and is driven by driving the engine EG. The hydraulic pump PN discharges hydraulic fluid to a hydraulic device such as the above boom cylinder 6A.

Specifically, a bracket 11A, on which the hydraulic pump PN is provided, is provided in the pump room 5A1. A filter head 13A (filter holding part) is attached to the bracket 11A. A hose 14A is attached to the filter head 13A.

A filter head 13B is attached to the pump room 5A1 through a bracket 11B. A fuel hose 14B is attached to the filter head 13B.

### Filter Head in Pump Room and Types of Filter

A filter 20A is attached to the filter head 13A. The filter 20A is an oil filter for the engine oil and eliminates dirt and the like contained in the engine oil flowing in the hose 14A.

The filter 20A is connected to the engine EG (see Fig. 2) through the hose 14A. The engine oil accumulated in the engine EG is pumped out of the engine EG to be transferred to the filter 20A. The engine oil after passing through the filter 20A is returned to the engine EG.

A filter 20B is attached to the filter head 13B. The filter 20B is a fuel pre-filter and eliminates dirt and the like contained in the fuel flowing in the fuel hose 14B. Note that the filter 20B is not a requisite for the hydraulic excavator I. The hydraulic excavator I without the filter 20B is also usable.

The filter 20B (fuel pre-filter) is connected to a fuel tank (not shown) through the hose 14B. The fuel in the fuel tank (not shown) is transferred to the filter 20B. Subsequently, the fuel is transferred to the filter 20C (fuel main filter). After passing through the filter 20C, the fuel is transferred to a fuel injector (not shown). The fuel remaining in the fuel injector is returned to the fuel tank through a hose (not shown).

As described above, the filters 20A and 20B are provided in the pump room 5A1 while the filter 20C is provided in the engine room 5A2.

The filters 20 (20A, 20B, 20C) are parts requiring a regular replacement since a filter member inside the filters is clogged by use of the filters 20. Timing for the regular replacement is judged, for instance, based on accumulated operational duration shown by SMR (service meter) that measures operational duration of the engine in the hydraulic excavator I. Such a judgment process is conducted, for instance, by a communication controller 200, a monitor 213, or a management server 111 which will be described below.

Identification devices 30A, 30B and 30C are respectively attached to the filters 20A, 20B and 20C. The identification device 30D is attached to the engine EG as described above. In other words, the filters 20A, 20B and 20C and the engine EG are target components to which the identification devices 30 (30A, 30B, 30C, 30D) are attached.

### Description of Identification Device

The identification devices 30 (30A, 30B, 30C, 30D) store and provide information relating to the target components (including devices such as the engine EG in addition to the replacement parts) to which the identification devices 30 are attached.

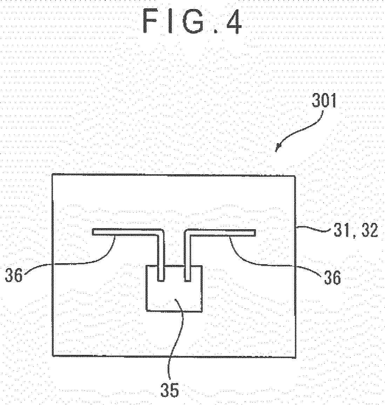

A passive type IC tag 301 that generates electric power by electromagnetic induction, microwaves and the like caused by electric waves outputted from the readers 15 (15A,15B) is usable as the identification devices 30A, 30B and 30C. In the exemplary embodiment, each of the identification devices 30A, 30B and 30C includes at least one of the IC tag 301 (identification part) (see Fig. 4). Accordingly, each of the identification devices 30A, 30B and 30C may include a single IC tag 301 or a plurality of IC tags 301.

The identification device 30D includes a single passive-type IC tag 301 described above. The IC tag 301 of the identification device 30D may be the same as or different from the IC tags 301 of the respective identification devices 30A, 30B and 30C in shape and configuration. The IC tag 301 of the identification device 30D at least includes an antenna 36 and an IC chip 35 which will be described below.

Since each of the identification devices 30 thus includes the passive type IC tags 301, an internal battery is unnecessary, so that a cost is reducible and operation failure caused by a run-out battery is preventable.

### Description of IC Tag

Fig. 4 is a schematic view showing a configuration of the IC tag 301.

The IC tag 301 is an RFID (Radio Frequency Identification) tag in which the IC chip 35 and the internal antenna 36 are encapsulated with package materials 31 and 32.

The IC tag 301 of the exemplary embodiment can communicate in a communication frequency zone, namely, a UHF (ultrahigh frequency) zone, specifically, in a zone of 860 MHz to 960 MHz. The communication frequency zone of the RFID tag may be a zone other than the above zone.

The IC chip 35 is connected to the antenna 36. A shape and a size of the antenna 36 are set so that the antenna 36 can communicate with the readers 15A and 15B. The IC chip 35 and the antenna 36 are held between the package materials 31 and 32. Fig. 4 is an illustration with the package material 31 being seen through. The IC tag 301 is attached to each of the filters 20A, 20B and 20C and the engine EG with a bonding member such as a double-sided adhesive tape or an adhesive agent.

The IC chip 35 stores parts information (tag information) including a code for identifying an IC chip 35 (TID: Tag Identifier) and a code for identifying a part (e.g., filter 20 and engine EG) to which each of the identification devices 30 is attached (EPC: Electronic Product Code).

Among the above codes, EPC stores identification information including a part name identification number for identifying a name of a part, a part number (as type information) for specifying a type of the part to which each of the identification devices 30 is attached, a manufacturing date, a serial number (manufacturing number) (as unique information) for specifying each of parts having the same part number, and a supplier code showing a manufacturer of the part. The part name identification number is used for identifying the parts such as the engine oil filter, fuel pre-filter and fuel main filter. For instance, an individual number is allocated to each of the parts as the part name identification number. When the part is the engine EG, an individual number allocated to the engine may be defined as the part name identification number. Moreover, when the part is the engine EG, the identification information includes, for instance, the number of times of overhaul of the engine EG.

### Description of Reader

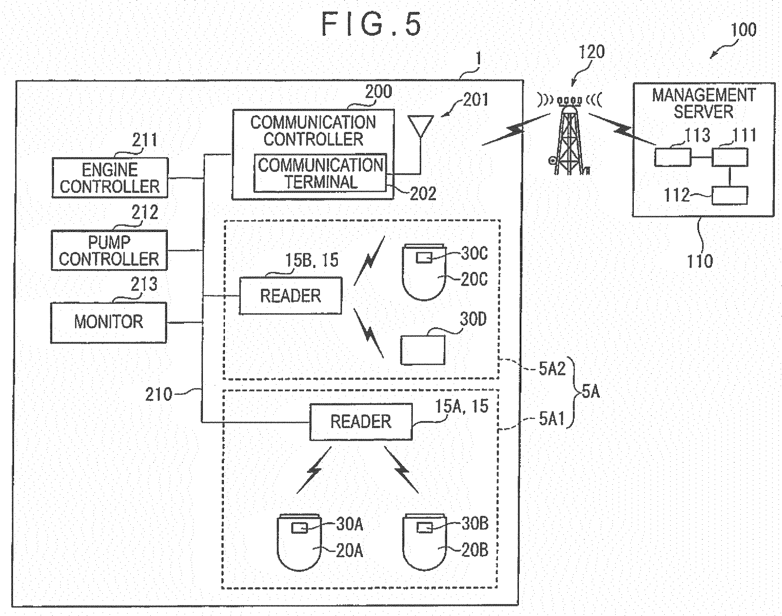

Fig. 5 is a block diagram showing a configuration of the hydraulic excavator and an overall configuration of an identification information acquisition system 100 including the hydraulic excavator 1 in the exemplary embodiment.

The readers 15 (15A, 15B), which are communication devices to communicate with the identification devices 30A, 30B, 30C and 30D, are attached to the machine room 5A as shown in Fig. 5. The readers 15 read out parts information including the identification information (hereinafter, also simply referred to as "data") stored in the respective IC tags 301 of the identification devices 30A, 30B, 30C and 30D. In the exemplary embodiment, the readers 15 each have a reading function. However, the readers 15 each may be replaced by a reader-writer having a writing function in addition to the reading function.

The reader 15A corresponds to a first communication device in the exemplary embodiment and is provided to the pump room 5A1. The reader 15A communicates with the identification devices 30A and 30B respectively attached to the filters 20A and 20B and supposed to be positioned within a communication range of the reader 15A, under the control of the communication controller 200. The reader 15A reads out the parts information from the identification devices 30A and 30B assuming that the parts information is readable. Further, the reader 15A controls an operation of the reader 15B. In other words, the reader 15A corresponds to the first communication device in the exemplary embodiment and serves as the master reader. The reader 15B corresponds to a second communication device in the exemplary embodiment and serves as the slave reader controllable by the master reader. The reader 15B reads out the parts information from the identification devices 30C and 30D assuming that the parts information is readable. Note that the communication range of the reader 15A indicates a range in which electric waves outputted from the reader 15A can reach the identification devices 30 and the reader 15A can receive response signals outputted from the identification devices 30 based on the outputted electric waves. The same applies to a communication range of the reader 15B.

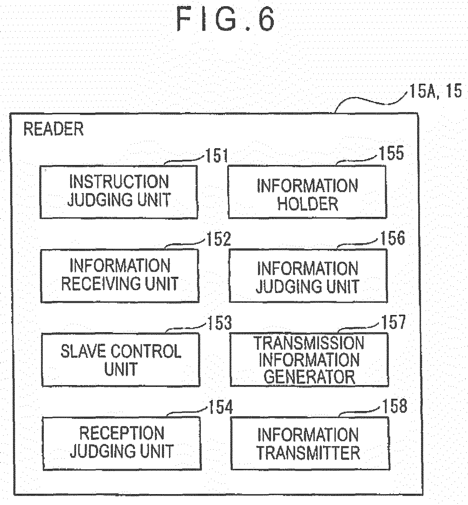

Fig. 6 is a block diagram showing a configuration of the reader 15A serving as the master reader.

As shown in Fig. 6, the reader 15A includes an instruction judging unit 151, information receiving unit 152, slave control unit 153, reception judging unit 154. information holder 155, information judging unit 156, transmission information generator 157 and information transmitter 158.

The instruction judging unit 151 judges whether or not instruction information of instructing acquisition of the parts information stored in the identification devices 30 is inputted from the communication controller 200 described below.

When the instruction judging unit 151 judges that the instruction information is inputted, the information receiving unit 152 outputs the electric waves to the identification devices 30 for a predetermined time and receives the electric waves outputted from the identification devices 30.

The slave control unit 153 controls the operation of the reader 15B serving as the slave reader. For instance, the slave control unit 153 outputs the same instruction information as the above instruction information to the reader 15B.

The reception judging unit 154 judges whether or not the electric waves including the parts information stored in the identification devices 30 are received from the identification devices 30 based on the electric waves received by the information receiving unit 152. Moreover, the reception judging unit 154 judges whether or not the reader 15B is normally operated by judging whether or not the reception judging unit 154 receives the parts information from the reader 15B within a predetermined time elapsed after the instruction information is outputted from the slave control unit 153. In other words, the reception judging unit 154 corresponds to a judging unit of the exemplary embodiment.

When the reception judging unit 154 judges that the parts information is received from the identification devices 30 based on the electric waves outputted from the information receiving unit 152 and when the reception judging unit 154 judges that the parts information of the identification devices 30 is received from the reader 15 (15B) serving as the slave reader, the information holder 155 holds both of the above parts information as master acquisition information (acquisition information of the first communication device). In other words, as the master acquisition information, the information holder 155 holds the parts information (first identification information) received from the identification devices 30A and 30B that are target components of which parts information are supposed to be acquired by the reader 15A and the parts information to be supposed to be acquired by the reader 15B. namely, slave acquisition information

(acquisition information of the second communication device: second identification information) acquired by the reader 15B and including the parts information of the identification devices 30C and 30D.

The information judging unit 156 judges whether or not the slave acquisition information, which is contained in the master acquisition information and held by the information holder 155, contains error information.

Moreover, the information judging unit 156 executes an overlapping judgment process of judging whether or not the parts information having the same contents is included in the held master acquisition information.

In the exemplary embodiment, the information judging unit 156 judges the parts information at least having the same part number and the same serial number to be the parts information having the same contents (parts information having identification information having the same contents). However, even when all of the identification devices 30A, 30B, 30C and 30D provided to the hydraulic excavator 1 have different part numbers (type information), as long as the type information has the same parts information about the part numbers read by the reader 15A or the reader 15B, the information judging unit 156 may judge the type information to be the parts information having the same contents (parts information having identification information having the same contents). Moreover, even when all of the identification devices 30A, 30B, 30C and 30D provided to the hydraulic excavator I have different serial numbers (unique information), as long as the unique information has the same parts information about the serial numbers read by the reader 15A or the reader 15B, the information judging unit 156 may judge the unique information to be the parts information having the same contents (parts information having identification information having the same contents).

Each of the identification devices 30A, 30B and 30C includes at least single IC tag 301. One of the readers 15 occasionally receives the parts information from the plurality of identification devices 30A, 30B and 30C, or the parts information from the identification device 30D, depending on the location of the IC tags 301. In other words, each of the readers 15 occasionally receives the parts information having different contents from the IC tags 301 of the identification devices 30.

On the other hand, a plurality of readers 15 (15A, 15B), which are disposed at different positions, occasionally receive the parts information from a single one of the identification devices 30, depending on positions where the identification devices 30 are provided.

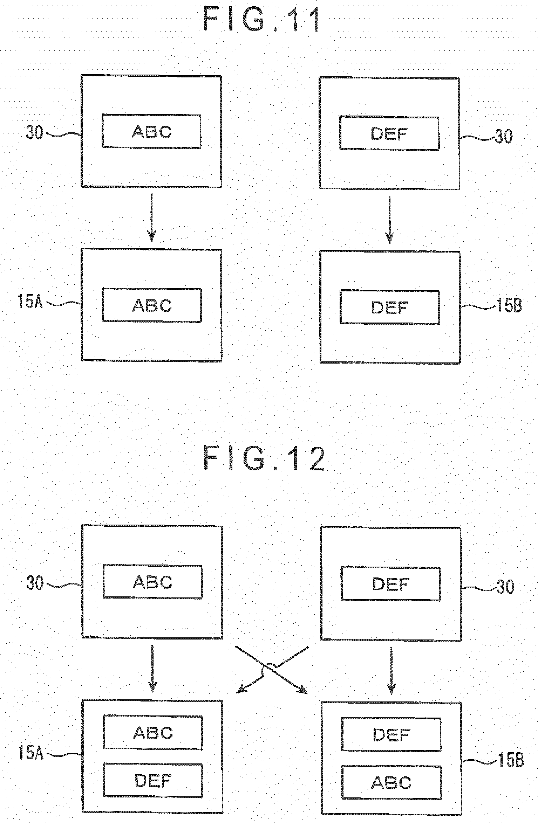

Accordingly, as described later with reference to Figs. 11 to 14, for instance, one of the readers 15 may receive the parts information from a single IC tag 301 of one of the identification devices 30, or alternatively, the plurality of readers 15 each may receive the parts information having the same identification information from the single IC tag 301 of the single dentification devices 30. In other words, depending on communication conditions between the readers 15 and the identification devices 30, the readers 15 occasionally receive the parts information from an identification device different from the identification device(s) 30 supposed to be positioned within the communication range of each of the readers 15.

To cope with this problem, when the information judging unit 156 judges that the parts information having the same contents is contained in the master acquisition information, the information holder 155 executes an organizing process (merging process) of deleting the parts information having the same contents except for one of those to organize the parts information having the same contents.

Accordingly, the master acquisition information held by the information holder 155 does not contain the parts information having the same contents. Although the information holder 155 deletes the parts information judged to have the same contents except for one of those in the exemplary embodiment, instead of being deleted, the parts information judged to have the same contents may be excluded from transmission information generated by the transmission information generator 157.

The transmission information generator 157 generates the transmission information including the master acquisition information held by the information holder 155. When the information judging unit 156 judges the parts information to have the same contents, the transmission information generator 157 generates the transmission information including the organized master acquisition information.

When the reception judging unit 154 judges that the parts information of the identification devices 30A and 30B are not acquired, the transmission information generator 157 generates error information (operational information) including information indicating the reader 15 (15A) and information indicating an operational state of the reader 15 (information indicating that communication between the reader 15 and the identification devices 30 is failed).

Further, when the reception judging unit 154 judges that the information from the reader 15B serving as the slave reader is not received within a predetermined time (i.e., when it is judged that the reader 15B is not normally operated), the transmission information generator 157 generates error information (operational information) including information indicating the reader 15 (15B) and information indicating an operational state of the reader 15 (information indicating that the reader 15B is not normally operated).

In addition, when the information judging unit 156 judges that the error information is contained in the information (slave acquisition information) received from the reader 15 (15B) serving as the slave reader, the transmission information generator 157 generates error information to be transmitted to the communication controller 200 based on the acquired error information. The information indicating the reader 15 (15B) as a transmission source and the information indicating the operation state of the reader 15 (information indicating that communication between the reader 15 and the identification devices 30 is failed), which are contained in the acquired error information, are to be transmitted as the error information to the communication controller 200.

The information transmitter 158 transmits the transmission information or the error information generated by the transmission information generator 157 to the communication controller 200 described later. In other words, the information transmitter 158 corresponds to an operational information transmitter and an identification information transmitter.

The reader 15B corresponds to the second communication device in the exemplary embodiment and is provided to the engine room 5A2. The reader 15B is supposed to communicate with the identification device 30C attached to the filter 20C and the identification device 30D attached to the engine EG. Specifically, the reader 15B communicates with the identification devices 30C and 30D supposed to be positioned within the communication range of the reader 15B. The reader 15B executes a process of reading the parts information from the identification devices 30C and 30D under control by the reader 15A.

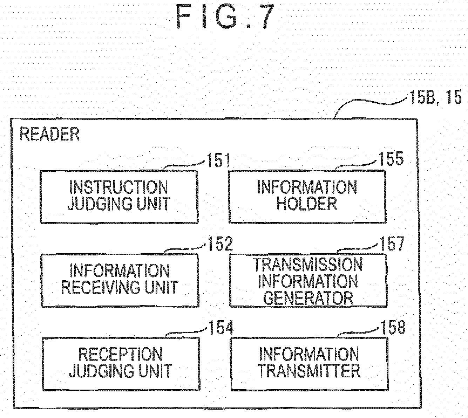

Fig. 7 is a block diagram showing a configuration of the reader 15B serving as the slave reader.

The reader 15B is configured in the same manner as the reader 15A except that some units are omitted. Specifically, as shown in Fig. 7. the reader 15B includes the instruction judging unit 151, information receiving unit 152, reception judging unit 154, information holder 155, transmission information generator 157 and information transmitter 158 described above.

The information holder 155 of the reader 15B holds the parts information received by the information receiving unit 152 as the slave acquisition information. The transmission information generator 157 of the reader 15B generates transmission information based on the slave acquisition information held by the information holder 155. The information transmitter 158 transmits the transmission information to the reader 15A serving as the master reader. When the reception judging unit 154 judges that the parts information is not acquired from the identification devices 30 (30C, 30D) that are target components of which parts information is acquired, the transmission information generator 157 of the reader 15B also generates the above error information and the information transmitter 158 transmits the error information.

In the exemplary embodiment, the reader 15B does not include the slave control unit 153 and the information judging unit 156 as described above. However, the reader 15B may have the slave control unit 153 and the information judging unit 156, where the slave control unit 153 and the information judging unit 156 are non-functional.

The information receiving unit 152 of the readers 15 communicates with the IC tags 301 of the identification devices 30, for instance, via electric waves in the UHF zone at 900 MHz. Since the readers 15 can communicate with the identification devices 30 (30A, 30B, 30C and 30D) that are about 1 m away from the readers 15 when the frequency of the electric waves fall within the above frequency zone, the readers 15 can be used even in the pump room 5A1 and the engine room 5A2.

In the exemplary embodiment, the readers 15 in a form of a reading device are used as communication devices. However, the readers 15 may be replaced by a reader-writer (reading and writing device) having a reading function of information from the identification devices 30 and a writing function of information to the identification devices 30.

Although two readers 15 (15A, 15B) are provided in the exemplary embodiment, only the reader 15A may be provided. Alternatively, the readers 15 may be provided by three or more readers including the readers 15A and 15B. Since the communication conditions between the readers 15 and the identification devices 30 depend on a relative positional relationship therebetween, with the plurality of readers 15, the parts information stored in the IC tags can be read with higher probability.

### Description of Each Controller

As shown in Fig. 5, in addition to the above configuration, the hydraulic excavator 1 (working vehicle) further includes the communication controller 200, the readers 15A and 15B, an engine controller 211, a pump controller 212 and a monitor 213 and an in-vehicle network 210 that connects the communication controller 200, readers 15A and 15B, engine controller 211, pump controller 212 and monitor 213 to allow data communication therebetween.

The engine controller 211 adjusts a fuel amount to be supplied to the engine EG to control output of the engine EG. The pump controller 212 controls output of the pump PN.

The monitor 213 has a display function of displaying a remaining amount of the fuel, failure information of the hydraulic excavator 1, and the like, and also has an input function of setting the operation of the hydraulic excavator I. The monitor 213 includes an SMR (service meter) that measures an operational duration of the engine EG of the hydraulic excavator 1, the SMR being displayed on the monitor 213. Information of the SMR (information of accumulated operational duration) is transmitted to the management center 110 through the communication controller 200 and the communication network 120.

The communication controller 200 has a communication terminal 202 connected to an antenna 201 in order to allow intercommunication with the management center 110 via a later-described communication network 120. The communication controller 200 not only serves as the controllers 211 and 212, the monitor 213 and a controller for controlling the operations of the readers 15 but also serves as a processor for processing the information acquired from the readers 15. In other words, the communication controller 200 corresponds to the controller and the processor in the exemplary embodiment. Accordingly, the communication controller 200 includes a storage for storing data acquired by the readers 15 and a program of processing the data. For instance, the program executes a process of comparing the data newly acquired by the readers 15 with the data stored in the storage. The communication controller 200 includes a calculator for executing such a process.

In the exemplary embodiment, the communication controller 200 activates the readers 15 when an operator of the hydraulic excavator 1 turns ON a key switch (not shown) to start the engine EG. In order to activate the readers 15, it is only required to turn the key switch to an accessory position to supply electric power from a battery (not shown) to electronic devices such as the communication controller 200 and the readers 15. In other words, the engine EG is not necessarily started in order to operate the readers 15.

A timing of activating the readers 15 is not limited to the above. For instance, a timer function may be provided to the communication controller 200 and the communication controller 200 may be set to activate the readers 15 at a predetermined timing (e.g., once per day or once per week). In other words, the readers 15 may be activated on a regular basis to receive the parts information from the identification devices 30.

Alternatively, the communication controller 200 may activate the readers 15 in response to an operational instruction by the operator. Specifically, when the operator operates the operational button for generating a predetermined start signal, the communication controller 200 may activate the readers 15 on receiving the start signal.

Further alternatively, the communication controller 200 may activate the readers 15 in response to an operational instruction by an administrator of the management center 110 described later (see Fig. 5). Specifically, the communication controller 200 may activate the readers 15 when the administrator transmits a predetermined start signal from the management center 110 to the hydraulic excavator 1 via the communication network 120 and the communication controller 200 receives the start signal. Alternatively, instead of the operational instruction by the administrator, a start signal generation program for generating a start signal in a predetermined cycle may be provided in the management center 110, thereby automatically transmitting the start signal to the hydraulic excavator 1.

In addition, a sensor may be provided to each of the filter heads 13A and 13B to detect attachment and detachment of the respective filters 20A, 20B and 20C (in which a filter head to be attached to the filter 20C is not shown), so that the readers 15 may be activated in response to the output from the sensor.

The communication controller 200 processes the data acquired by the readers 15 as described above. For instance, the communication controller 200 compares the above acquired data with the stored data. When the communication controller 200 judges that data is newly acquired, the communication controller 200 updates the stored data with the newly acquired data. Such a comparison process may be conducted in the management server 111 described later.

The communication controller 200 transmits the information read from the identification devices 30 along with date data to the management server 111 of the management center 110 via the communication terminal 202, the antenna 201 and the communication network 120. The communication controller 200 includes, for instance, a timepiece IC (not shown) and can acquire the date data with the timepiece IC. The date data may be exemplified by date and time when the readers 15 are activated (date and time when electric waves are transmitted), date and time when the readers 15 read the data of the identification devices 30, and date and time when the data of the identification devices 30 is transmitted to the management server 111. The date data may be replaced by data indicating a date or data indicating a time.

Note that a controller (e.g., the pump controller 212) other than the communication controller 200 or the readers 15 may have the above-described functions of the communication controller 200.

In the hydraulic excavator 1 that is the working vehicle described above, the identification information acquisition system of the exemplary embodiment includes the identification devices 30 (30A, 30B, 30C, 30D) provided to the hydraulic excavator 1, the readers 15 (15A, 15B) and the communication controller 200.

### Identification Information Acquisition System for Working Vehicle

Next, the identification information acquisition system 100 with use of the information stored in the identification devices 30 will be described. The identification information acquisition system 100 including the hydraulic excavator 1 is exemplarily described below. However, the invention is also applicable to other working vehicles in a form of a construction machine.

The identification information acquisition system 100 manages and monitors the parts and engine EG installed in the working vehicle in the management center 110 located apart from the working vehicle, via the communication network 120. As shown in Fig. 5, the identification information acquisition system 100 includes the management center 110, at least one working vehicle (e.g., the hydraulic excavator 1), and the communication network 120 that transmits and receives information between the management center 110 and the working vehicle. The working vehicle for the identification information acquisition system 100 may be of different types (e.g., a hydraulic excavator and a bulldozer).

Among these, the communication network 120 is used for data communication in a form of wireless communication. A mobile phone network and a satellite communication network are usable.

The management center 110 includes the management server 111 that manages all various information including parts information of a plurality of working vehicles.

The management server 111 includes a large-volume storage including hard disks and the like. The management server 111 can mutually communicate with a display 112 including a liquid crystal monitor and the like, a communication device 113 capable of wireless communication or wired communication, and the like. The management server 111 manages and stores the above parts information received from the hydraulic excavator 1, the information about the accumulated operational duration, and the like via the communication network 120.

Specifically, the management server 111 in a form of the above storage stores TID and EPC contained in the parts information in manner associated with each other. Accordingly, by cross-checking the newly acquired parts information (data), which is a combination of TID and EPC read from the IC tag 301, and the stored parts information (data), the management server 111 can judge whether or not the part (e.g., filter 20) of the working vehicle is replaced and whether or not the replaced part is a genuine product. By such a cross-checking, a time elapsed after the part is attached to the working vehicle can be recognized. Accordingly, for instance, the management server 111 can manage a replacement timing of the filter 20.

Information Collection Process in Identification Information Acquisition System

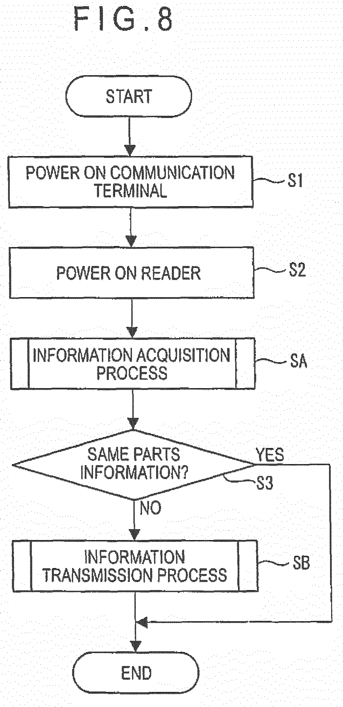

Fig. 8 is a flow chart showing an information collection process executed in the identification information acquisition system 100.
In the identification information acquisition system 100 in the exemplary embodiment, an information collection process is executed in which the readers 15 acquire the parts information from the identification devices 30 based on the instruction information inputted from the communication controller 200 of the hydraulic excavator 1 and the readers 15 transmit the received parts information to the management center 110 via the communication network 120.

In the information collection process, as shown in Fig. 8, electric power is initially supplied from a battery (not shown) to the communication terminal 202 in response to the ON operation of the key switch (not shown) by the operator and a power source of the communication terminal 202 is turned ON, whereby the communication controller 200 is activated (Step S1).

Further, electric power is also supplied from a battery (not shown) to the readers (15A, 15B) and a power source of the readers 15 (15A, 15B) is turned ON (Step S2). Alternatively, the power source of the readers 15 may be turned ON by the operational instruction of the administrator and the like. Specifically, the communication controller 200 may transmit an ON signal for turning ON the power source of the readers 15 (15A, 15B) to the readers 15 (15A, 15B) via the in-vehicle network 210, whereby the power source of the readers 15 (15A, 15B) may be turned ON after receiving the ON signal. With this arrangement, even when the hydraulic excavator 1 is not operated, for instance, during night, the readers 15 (15A, 15B) can acquire the parts information including the identification information from the identification devices 30. For instance, the communication controller 200 is set to be automatically activated in a predetermined cycle. When the communication controller 200 is activated and receives a predetermined start signal via the antenna 201, the communication controller 200 transmits the ON signal to the readers 15 (15A, 15B) via the in-vehicle network 210. After receiving the ON signal, the readers 15 (15A, 15B) are activated to read the identification information of the identification devices 30. After Step S2, the communication controller 200 and the readers 15 execute an information acquisition process SA.

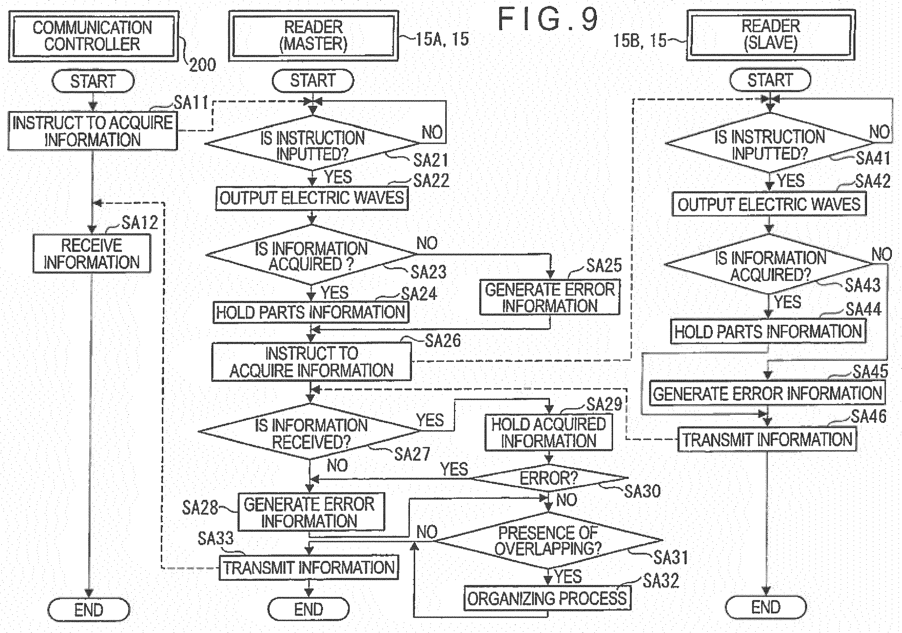

Fig. 9 is a flow chart showing the information acquisition process SA.

In the information acquisition process SA, as shown in Fig. 9, the communication controller 200 instructs the master reader 15A to acquire the parts information from the identification devices 30 (Step SA11). Specifically, the communication controller 200 outputs instruction information of acquiring the parts information to the reader 15A via the in-vehicle network 210. Subsequently, the communication terminal 202 proceeds to a process in Step SA12.

After the power source is turned ON in Step S2, the reader 15A judges using the instruction judging unit 151 whether or not the instruction information of acquiring the parts information is inputted from the communication terminal 202 (Step SA21). This judgment process by the instruction judging unit 151 is repeated until the instruction information is inputted.

When the instruction judging unit 151 judges that the instruction information is inputted (Step SA21, Yes), the reader 15A outputs electric waves using the information receiving unit 152 to the identification devices 30A and 30B for a predetermined time.

Subsequently, the reader 15A judges using the reception judging unit 154 whether or not the parts information is acquired from the identification devices 30A and 30B (whether or not the electric waves including the parts information is received)(Step SA23).

When it is judged in the judgment process in Step SA23 that the parts information is acquired (i.e., the electric waves are received)(Step SA23, YES), the reader 15A associates the acquired parts information with the above date data and holds the associated information as the master acquisition information, using the information holder 155 (Step SA24). The date data acquired by the timepiece IC (not shown) of the communication controller 200 may be associated with the parts information. Alternatively, the reader 15A may transmit the acquired parts information as the transmission information as described later to the communication controller 200 without being associated with the date data. The transmitted parts information may be subsequently associated with the date data. Subsequently, the reader 15A proceeds to a process in Step SA26.

On the other hand, when it is judged in the judgment process in Step SA23 that the parts information is not acquired (Step SA23, NO), the reader 15A generates the error information including the information indicating the reader 15 (15A) and the information indicating no communication between the reader 15 (15A) and the identification devices 30, using the transmission information generator 157 (Step SA25). Subsequently, the reader 15A proceeds to a process in Step SA26.

In Step SA26, the reader 15A outputs instruction information of instructing the acquisition of the parts information to the reader 15B via the in-vehicle network 210, using the slave control unit 153 (Step SA26). Subsequently, the reader 15A proceeds to a process in Step SA27.

The reader 15B serving as the slave reader executes Steps SA41 to 45, which are the same as Steps SA21 to 25, and Step SA46.

Specifically, using the instruction judging unit 151, the reader 15B judges whether or not the above instruction information is inputted via the in-vehicle network 210 (Step SA41). This judgment process is repeated until the instruction information is inputted.

When the instruction judging unit 151 judges that the instruction information is inputted (Step SA41, Yes), the reader 15B outputs electric waves using the information receiving unit 152 to the identification devices 30C and 30D for a predetermined time (Step SA42).

Subsequently, the reader 15B judges using the reception judging unit 154 whether or not the parts information is acquired from the identification devices 30C and 30D (whether or not the electric waves including the parts information are received)(Step SA43).

When it is judged in the judgment process in Step SA23 that the parts information is acquired (i.e., the electric waves are received) (Step SA43, YES), the reader 15B associates the acquired parts information with the above date data and holds the associated information as the slave acquisition information, using the information holder 155 (Step SA44). The acquisition of the date data and the association between the parts information and the date data may be conducted in the same manner as described above. Subsequently, the reader 15B proceeds to a process in Step SA46.

On the other hand, when it is judged in the judgment process in Step SA43 that the parts information is not acquired (Step SA43, NO), the reader 15B generates the error information including the information indicating the reader 15 (15B) and the information indicating no communication between the reader 15 (15B) and the identification devices 30, using the transmission information generator 157 (Step SA45). Subsequently, the reader 15B proceeds to a process in Step SA46.

In Step SA46, when the slave acquisition information is held in Step SA44, the reader 15B generates the transmission information including the slave acquisition information. When the error information is generated in Step SA45, the reader 15B generates the transmission information including the error information and transmits the transmission information using the information transmitter 158 to the reader 15A (Step SA46).

By this step, the information acquisition process SA by the reader 15B ends.

In Step SA27, using the reception judging unit 154, the reader 15A judges whether or not the transmission information is received from the reader 15B within a predetermined time elapsed after the output of the instruction information in Step SA26 (Step SA27).

When it is judged in the judgment process in Step SA27 that the transmission information is not received (Step SA27, NO), the reader 15A generates the error information including the information indicating the reader 15B and the information indicating the operational state of the reader 15B (information indicating that the transmission information from the reader 15B is not received and that the reader 15B is not normally operated, using the transmission information generator 157 (Step SA28). Subsequently, the reader 15A proceeds to a process in Step SA31.

On the other hand, when it is judged in the judgment process in Step SA27 that the transmission information is received (Step SA27. YES), the reader 15A holds the slave acquisition information contained in the transmission information and the parts information held in Step SA24 as the master acquisition information, using the information holder 155 (Step SA29). At this time, in the same manner as in Step SA24, the reader 15A associates the parts information contained in the slave acquisition information with the above date data and holds the associated information.

Next, the reader 15A judges using the information judging unit 156 whether or not the slave acquisition information, which is contained in the master acquisition information, contains the error information (Step SA30).

When it is judged in the judgment process in Step SA30 that the error information is not contained (Step SA30, NO), the reader 15A proceeds to a process in Step SA31.

When it is judged in the judgment process in Step SA30 that the error information is contained (Step SA30, YES), the reader 15A proceeds to the process in Step SA28 and generates the error information based on the acquired error information. Subsequently, the reader 15A proceeds to the process in Step SA31 as described above.

In Step SA31, the reader 15A executes the above overlapping judgment process using the information judging unit 15b (Step SA31).

When it is judged in the judgment process in Step SA31 that the parts information having the same contents is not contained in the master acquisition information (Step SA31, NO), the reader 15A proceeds to a process in Step SA33.

On the other hand, when it is judged in the judgment process in Step SA31 that the parts information having the same contents is contained in the master acquisition information (Step SA31, YES), the reader 15A executes the above organizing process using the information holder 155. With this process, the overlapping parts information is organized. Subsequently, the reader 15A proceeds to a process in Step SA33.

In Step SA33, when the master acquisition information is held by the information holder 155, the reader 15A generates the transmission information including the master acquisition information using the transmission information generator 157. When the error information is generated by the transmission information generator 157, the reader 15A generates the transmission information including the error information. Subsequently, the reader 15A transmits the transmission information to the communication controller 200 via the in-vehicle network 210 using the information transmitter 158 (Step SA33).

By this step, the information acquisition process SA by the reader 15A ends. When a plurality of readers 15B serving as the slave readers are present, each of the plurality of readers 15B executes the processes in Steps SA26 to SA30 described above and executes the above overlapping judgment process in Step SA31 and the above organizing process in Step SA32 to all the acquired parts information.

In Step SA12, the communication controller 200 acquires the transmission information (information including at least one of the parts information and the error information) transmitted by the reader 15A.

By this step, the information acquisition process SA by the communication controller 200 ends.

Referring back to Fig. 8, in the hydraulic excavator 1 after the information acquisition process SA ends, the communication controller 200 judges whether or not the parts information contained in the transmission information acquired in Step SA12 described above (the parts information received from each of the identification devices 30) and the parts information already stored in a predetermined storage of the communication controller 200 are the same (Step S3). Since an instance where the error information is contained in the transmission information corresponds to an instance where the parts information cannot be acquired by some reason, the transmission information including the error information is judged to be not the same as the stored parts information. Moreover, also in an instance where the transmission information cannot be acquired from the reader 15A in Step SA12, it is judged that the parts information is not the same. In such an instance, the communication controller 200 generates the error information including the information indicating that the information cannot be acquired from the reader 15 (15A), in other words, the information indicating that the reader 15A is not normally operated. Subsequently, the communication controller 200 transmits the transmission information including the error information to the management server 111 in an information transmission process SB described later.

When it is judged in the judgment process in Step S3 that the newly acquired parts information and the stored parts information are the same (Step S3. YES), the communication controller 200 ends the information collection process in the exemplary embodiment. However, even when the newly acquired parts information is the same as the already stored parts information, the later-described information transmission process SB may be executed.

On the other hand, when it is judged in the judgment process in Step S3 that the newly acquired parts information and the stored parts information are not the same (Step S3, NO), the communication controller 200 executes the information transmission process SB of transmitting the acquired information to the management center 110.

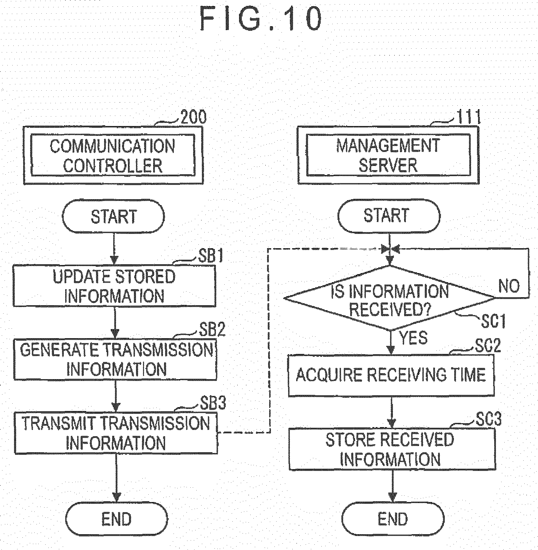

Fig. 10 is a flow chart showing the information transmission process SB to be executed by the communication controller 200 and an information storage process to be executed by the management server 111.

Firstly, the information transmission process SB (Steps SB1 to SB3) will be described.-

In the information transmission process SB, when the parts information is newly acquired, the communication controller 200 updates the already stored parts information with the newly acquired parts information as shown in Fig. 10 (Step SB1). At this time, when the parts information of all the identification devices 30 is already acquired, the communication controller 200 may update all the already stored parts information with the newly acquired information. When the acquired parts information is different from the already stored parts information, only the parts information judged different may be updated with the newly acquired parts information. Alternatively, the currently acquired parts information may be displayed on the monitor 213. Further, when the error information is acquired, the monitor 213 or the like may issue an alarm message.

Next, the communication controller 200 generates the transmission information for transmitting the acquired information to the management server 111 (Step SB2). The transmission information contains the parts information judged different and the error information in Step S3 described above and the above date data relating to those information. All the newly acquired information (the information contained in the transmission information received from the reader 15A in Step SA12) may be contained in the transmission information.

Subsequently, the communication controller 200 transmits the generated transmission information to the management server 111 via the communication network 120 (Step SB3).

By this step, the information transmission process SB in the hydraulic excavator I ends.

Next, the information storage process (Steps SC1 to SC3) will be described. The management server 111 executes the information storage process described below.

In the information storage process, as shown in Fig. 10, the management server 111 repeats the judgment process of judging whether or not the transmission information is received from a predetermined working vehicle (e.g., the hydraulic excavator 1)(Step SC1).

When it is judged that the transmission information is received (Step SC1, YES), the management server 111 acquires a date (time and date) when the transmission information is received (Step SC2).

Subsequently, the management server 111 extracts the parts information and the error information from the received transmission information and stores these information and the date acquired in Step SC2 in a manner associated with each other (Step SC3). At this time, after executing the same judgment process in Step S3, the parts information different from the previously acquired parts information and the error information may be reported to the administrator of the management server 111.

By this step, the information storage process in the management server 111 ends. In other words, the information collection process in the identification information acquisition system 100 ends.

In the above information collection process, when the operator turns ON the key switch (not shown), the power source of the readers 15 is turned ON and the information acquisition process SA is executed. However, the timing when the power source of the readers 15 is turned ON is changeable as desired as described above.

With the above-described identification information acquisition system 100, the management server 111 acquires the parts information of the identification devices 30A, 30B, 30C and 30D, thereby recognizing the replacement timing of the filters 20A, 20B and 20C and the number of times of overhaul of the engine EG.

When the parts information about the identification devices 30 received by the management server 111 and the date information associated with the parts information when the hydraulic excavator 1 acquires and transmits the parts information are respectively different from the parts information and the date information which are previously received by the management server 111, the management server 111 can recognize the attachment of the filters 20A, 20B and 20C and the engine EG and can recognize the time of the parts replacement and the time of the overhaul of the engine EG.

It is supposed that an imitation filter may be not provided with a genuine identification device 30 or may be provided with no identification device 30. Accordingly, when the imitation filter is attached to the hydraulic excavator 1, the reader 15, communication controller 200 and management server 111 may be unable to acquire the parts information. In this case, the readers 15 generate the error information described above and the error information is acquired by the communication controller 200 and the management server 111 via the reader 15A serving as the master reader. Consequently, the management server 111 can presume that an imitation filter is possibly attached to the hydraulic excavator 1.

The respective replacement timings of the filters 20A, 20B and 20C are not necessarily the same, but the replacement timing of each of the filters 20A, 20B and 20C can be recognized by the communication controller 200 by comparing the newly acquired data with the already stored data as described above. Since the management server 111 can recognize use duration of each of the filters 20A, 20B and 20C in the working vehicle in association with the information of the SMR (service meter)(not shown) recording the accumulated operational duration in the working vehicle, a next replacement timing of the filters 20A, 20B and 20C can be easily and reliably managed. Moreover, since the number of the times of the overhaul of the engine EG, which is contained in the parts information of the identification device 30D, can be acquired, a next overhaul timing can be easily and reliably managed based on a change in the accumulated operational duration after an increment in the number of the times of the overhaul of the engine EG.

It is crucial to reliably acquire the information about the identification devices 30 by a suitable operation of each of the readers 15 in order to establish the identification information acquisition system 100.

An acquisition pattern of the parts information in the identification information acquisition system 100 will be described with reference to Figs. 11 to 14. The acquisition pattern is not limited to examples shown in Figs. 11 to 14, but the examples shown in Figs. 11 to 14 are representative of the acquisition pattern.

Figs. 11 to 14 show various examples of the acquisition pattern of the parts information when the identification information (parts information) of two identification devices 30 attached to different target components (e.g., filters 20A, 20B) are acquired by the readers 15A and 15B.

In an instance shown in Fig. 11, a first one of the identification devices 30 stores parts information including identification information ABC while a second one of the identification devices 30 stores parts information including identification information DEF. The reader 15A acquires the parts information including the identification information ABC of the first one of the identification devices 30 while the reader 15B acquires the parts information including the identification information DEF of the second one of the identification devices 30. In the instance of Fig. 11, the readers 15A and 15B thus read the parts information including the respective identification information ABC and DEF from the identification devices 30.

In this instance, the reader 15B (second communication device) transmits the parts information including the acquired identification information DEF to the reader 15A (first communication device). The reader 15A holds the self-acquired identification information ABC and the identification information DEF transmitted from the reader 15B and judges whether or not the identification information having the same contents is present. Since the identification information ABC is different from the identification information DEF, the reader 15A does not merge the above identification information (parts information) and transmits the parts information including the identification information ABC and the identification information DEF to the communication controller 200.

Also in an instance shown in Fig. 12, the first one of the identification devices 30 stores the parts information including the identification information ABC while the second one of the identification devices 30 stores the parts information including the identification information DEF. In the instance of Fig. 12, since the two identification devices 30 exist within the communication range of the readers 15A and 15B, each of the readers 15A and 15B acquires the parts information including the identification information ABC and the identification information DEF from the identification devices 30. In the instance of Fig. 12, thus, the readers 15A and 15B read the same parts information including the identification information ABC and DEF.

In this instance, the reader 15B (second communication device) transmits the parts information including the acquired identification information ABC and DEF to the reader 15A (first communication device). The reader 15A holds the self-acquired parts information including the identification information ABC and DEF and the parts information including the identification information ABC and DEF transmitted from the reader 15B and judges whether or not the identification information having the same contents is present. The reader 15A merges pieces of parts information containing the same identification information ABC into a single piece of parts information containing the identification information ABC and merges pieces of parts information containing the same identification information DEF into a piece single of parts information containing the identification information DEF. By the above organizing process (merging process), a piece of parts information including the identification information ABC and a piece of parts information including the identification information DEF remain present. Accordingly, the reader 15A transmits the parts information including the identification information ABC and the identification information DEF to the communication controller 200.

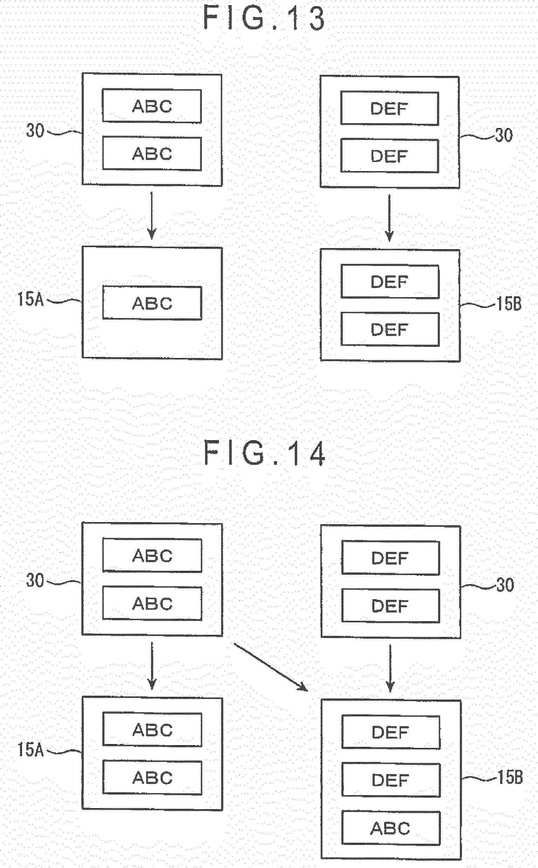

In an instance shown in Fig. 13, the first one of the identification devices 30 has two identification components in which the parts information including identification information ABC is stored while the second one of the identification devices 30 has two identification components in which the parts information including identification information DEF is stored. The reader 15A acquires the parts information including identification information ABC from one of the identifcation components of the first one of the identification devices 30 while the reader 15B acquires the parts information including the identification information DEF from the two identification components of the second one of the identification devices 30. In the instance of Fig. 13, the reader 15B thus reads the same parts information from each of the two identification components of the second one of the identification devices 30.

In this instance, the reader 15B (second communication device) transmits two pieces of parts information including the acquired identification information DEF to the reader 15A (first communication device). The reader 15A holds the self-acquired parts information including the identification information ABC and two pieces of parts information transmitted from the reader 15B and judges whether or not the identification information having the same contents is present. The reader 15A merges the same parts information including the identification information DEF into a piece of parts information including the identification information DEF. By the above organizing process (merging process), a piece of parts information including the identification information ABC and a piece of parts information including the identification information DEF remain present. Accordingly, the reader 15A transmits the parts information including the identification information ABC and the identification information DEF to the communication controller 200.

In the instance of Fig. 13, the first one of the identification devices 30 has two identification components in which the parts information including identification information ABC is stored. However, the first one of the identification devices 30 may have only one identification component in which the parts information including identification information ABC is stored. Also in this instance, when the reader 15A acquires only a piece of parts information including the identification information ABC and the reader 15B acquires two pieces of parts information including the identification information DEF, the reader 15A is to execute the same merging process as in the instance of Fig. 13.

In an instance shown in Fig. 14, in the same manner as in the instance of Fig. 13, the first one of the identification devices 30 has two identification components in which the parts information including identification information ABC is stored while the second one of the identification devices 30 has two identification components in which the parts information including identification information DEF is stored. The reader 15A reads parts information from each of the two identification components of the first one of the identification devices 30. The reader 15B acquires the parts information (including identification information DEF) from each of the two identification components of the second one of the identification devices 30 and further acquires the parts information (including the identification information ABC) from one of the two identification components from the first one of the identification devices 30. In the instance of Fig. 14, the reader 15A thus reads the same parts information from each of the two identification components of the first one of the identification devices 30. The reader 15B reads the same parts information from each of the two identification components of the second one of the identification devices 30.

In this instance, the reader 15B (second communication device) transmits the acquired three pieces of the parts information (three pieces of the parts information respectively including identification information DEF, DEF and ABC) to the reader 15A (first communication device). The reader 15A holds the self-acquired two pieces of parts information (two pieces of parts information including the identification information ABC and ABC) and the three pieces of parts information (three pieces of the parts information respectively including identification information DEF, DEF and ABC) transmitted from the reader 15B and judges whether or not the identification information having the same contents is present. The reader 15A merges pieces of parts information containing the same identification information ABC into a single piece of parts information containing the identification information ABC and merges pieces of parts information containing the same identification information DEF into a piece single of parts information containing the identification information DEF. By the above organizing process (merging process), a piece of parts information including the identification information ABC and a piece of parts information including the identification information DEF remain present. Accordingly, the reader 15A transmits the parts information including the identification information ABC and the identification information DEF to the communication controller 200.

According to the above described hydraulic excavator 1 and identification information acquisition system 100 in the exemplary embodiment, the following advantages can be attained.

In the hydraulic excavator 1 (working vehicle), the reader 15A (first communication device) serving as the master reader is disposed in the pump room 5A1 in which a temperature is lower than a temperature in the engine room 5A2 where the reader 15B (second communication device) serving as the slave reader is disposed. With this arrangement, the reader 15A that controls the operation of the reader 15B can be disposed at a position within an allowable temperature range and can be operated within the allowable temperature range. Accordingly, the reader 15A can be appropriately operated and appropriately control the reader 15B.

When the reader 15B is not normally operated and the reader 15A does not receive the transmission information from the reader 15B, the reader 15A transmits the transmission information including the error information to the communication controller 200. This error information contains the information indicating the reader 15B and contents of the error. With this arrangement, the communication controller 200 and, further, the management server 111 can recognize based on the error information that the reader 15 is not normally operated. Accordingly, the operational condition of the reader 15 serving as the slave reader is recognizable.

The reader 15A not only controls the reader 15B but also collectively transmits the slave acquisition information acquired by the reader 15B and the master acquisition information acquired by the reader 15A. With this arrangement, as compared with when each of the readers 15 independently transmits the information to the communication controller 200, a frequency of transmitting the information from each of the readers 15 to the communication controller 200 can be decreased. Additionally, a processing load applied to the communication controller 200 can be reduced.

### Modification(s)

The scope of the invention is not limited to the above exemplary embodiment but includes modifications and improvements to the extent that an object of the invention can be achieved.

In the above exemplary embodiment, the reader 15B (second communication device) has no information judging unit 156 and the information holder 155 of the reader 15B does not execute the organizing process. However, the arrangement of the reader 15B is not limited thereto. Specifically, the reader 15B may also include the information judging unit 156. When the information judging unit 156 judges that the slave acquisition information contains the same parts information, the information holder 155 of the reader 15B may execute the above organizing process of merging the parts information judged to have the same contents among the parts information contained in the slave acquisition information. In the instances of Figs. 13 and 14, the reader 15B holds two pieces of parts information including the same identification information DEF in the slave acquisition information. In such instances, when the reader 15B has the information judging unit 156, the information holder 155 of the reader 15B may merge the two pieces of parts information including the same identification information DEF.

In other words, the parts information having the same contents are merged in the reader 15B when it is judged that the parts information having the same contents is acquired and contained in the slave acquisition information including the parts information that is acquired from the identification devices 30 supposed to be positioned within the communication range or the identification devices 30 supposed to be not positioned within the communication range (e.g., when a filter 20 is provided with identification devices 30 storing the same parts information). Accordingly, when the reader 15B acquires the parts information having the same contents from each of the identification devices, the reader 15B merges the parts information having the same contents and transmits the merged slave acquisition information to the reader 15A. On the other hand, when it is judged that the parts information having the same contents is not contained, the reader 15B transmits the held slave acquisition information to the reader 15A.

This arrangement prevents the slave acquisition information to be transmitted to the reader 15A from containing the parts information having the same contents. Accordingly, a processing load of the slave acquisition information applied to the reader 15A is reducible. Additionally, since an information volume of the slave acquisition information is reducible, the information volume to be transmitted to the reader 15A is reducible.

On the other hand. when the reader 15B executes the judgment process and the organizing process, the information judging unit 156 of the reader 15A (first communication device) may not execute the above overlapping judgment process to the received slave acquisition information. In this arrangement, as long as the respective communication ranges of the readers 15A and 15B certainly do not overlap with each other, the information judging unit 156 of the reader 15A may execute the above overlapping judgment process only to the parts information acquired by the reader 15A from the identification device 30.

Further, the management server 111 may execute the overlapping judgment process and the organizing process while the reader 15A and the reader 15B do not execute the overlapping judgment process and the organizing process. In the above modification, the identification information acquisition system 100 includes the identification device 30 (30A, 30B, 30C, 30D) provided to the hydraulic excavator 1, the readers 15 (15A, 15B), the communication controller 200 and the management server 111. In this arrangement, the reader 15B transmits the acquired parts information to the reader 15A and the reader 15A transmits the parts information received from the reader 15B and the self-acquired parts information to the management server 111 through the communication controller 200. The management server 111 judges whether or not the received parts information contains the parts information having the same identification information. When the management server 111 judges that the received parts information contains the parts information having the same identification information, the management server 111 merges the parts information having the same identification information.

When the reader 15A has a function of the communication controller 200, the reader 15A may directly transmit the parts information to the management server 111.

In the above exemplary embodiment, the information judging unit 156 judges that the parts information including the identification information having the same part number (type information) and the same serial number (unique information) is the parts information having the same contents. However, in addition to the above information, any other information may be used for judging whether or not the parts information has the same contents.

Alternatively, the parts information including the identification information having the same contents in at least one of the type information (part number) and the unique information (serial number) may be judged as the parts information having the same contents. In a working vehicle (hydraulic excavator 1), since components to which the identification devices 30 are attached are usually different, different type information are assigned to the identification devices 30. Accordingly, for instance, when the readers 15A and 15B hold the identification information having the same type information, it can be judged that the readers 15A and 15B receive the same parts information.

Moreover, the unique information of each of the components is also usually different. Accordingly, when the readers 15A and 15B hold the identification information having the same unique information, it can be judged that the readers 15A and 15B receive the same parts information.

In the above exemplary embodiment, the reader 15A serving as the master reader is disposed in the pump room 5A1 of the machine room 5A and the reader 15B serving as the salve reader is disposed in the engine room 5A2 separated from the pump room 5A1 through the partition 5A3 in the machine room 5A. However, the layout of the readers 15A and 15B is not limited thereto. In the working vehicle, the readers 15 are not necessarily disposed in the machine room 5A, but may be disposed at a position where the readers 15 can communicate with the identification devices 30 to be removed together with the replacement component. Moreover, the position where the master reader is disposed and the position where the slave reader is disposed are not necessarily separated by a partition (e.g., the partition 5A3).

In the above exemplary embodiment, the reception judging unit 154 of the reader 15A judges that the reader 15B is not normally operated when the transmission information is not received from the reader 15B. However, the operational condition of the reader 15B is not necessarily judged as described above. The operational condition of the reader 15B may be judged based on other indexes. For instance, a temperature sensor may be provided in the engine room 5A2. When a temperature measured by the temperature sensor falls out of the allowable temperature range of the reader 15, the reader 15B may be judged not to be normally operated.

In the above exemplary embodiment, after the reader 15A receives and acquires the parts information, the reader 15A outputs the instruction information, whereby the reader 15B receives and acquires the parts information. However, the order of timings when the readers 15A and 15B respectively receive and acquire the parts information is not limited to the above. After the reader 15B serving as the slave reader receives and acquires the parts information, the reader 15A serving as the master reader may receive and acquire the parts information.

In the above exemplary embodiment, the communication controller 200 transmits the transmission information, which contains the parts information received from the identification device 30, to the management server 111 of the management center 110 via the communication network 120. However, a destination of the transmission information is not limited to the above. Specifically, the communication controller 200 does not necessarily transmit the parts information to the management center 110. In this case, for instance, the communication controller 200 may display the acquired parts information and the error information on the monitor 213, whereby the operator can recognize the parts information, and furthermore, conditions of the components. Alternatively, the acquired parts information and the error information may be stored in a predetermined storage. A service engineer may access the hydraulic excavator I, connect a communication cable to a terminal (not shown) connected to the storage, and download the parts information stored in the storage and the error information to be outputted.

In the above exemplary embodiment, the communication controller 200 executes the judgment process of whether or not the parts information acquired by each of the readers 15 is the same as the already stored parts information (parts information previously acquired). However, the judgment process is not limited to the above. For instance, each of the readers 15 may store the previously received parts information, judge whether or not this parts information is the same as the newly received parts information, and individually transmit the judgment results to the communication controller 200 or transmit the judgment results to the communication controller 200 via the reader 15A (master reader). In this case, when the previously received parts information does not contain the parts information newly received from each of the identification device 30, the readers 15 judge that the new received parts information and the previous parts information are not the same.

In the above exemplary embodiment, the hydraulic excavator 1 (working vehicle) includes two readers 15 in which the reader 15A serves as the master reader and controls the reader 15B serving as the slave reader. The number of the readers 15 is not limited to two. The number of the readers 15 is appropriately changeable as long as at least one of a plurality of readers 15 serves as the master reader and controls the rest of the readers 15 serving as the slave reader. Further, the reader 15B is not necessarily controlled by the other reader 15 (15A). It is only required that the parts information acquired by the readers 15 is transmitted to at least one of the readers 15.

Furthermore, only a single reader 15 may be provided to the working vehicle. When there is only a small number of target components attached to the identification devices, when the target components are densely provided in a small range, or the like, the single reader 15 is enough to acquire the parts information from all the identification devices on the target components. Also in such instances, the reader 15 judges whether or not the acquired parts information contains the parts information having the same identification information. When the reader 15 judges that the acquired parts information contains the parts information having the same identification information, it is only required for the reader 15 to execute the organizing process (merging process).

In the above exemplary embodiment, each of the identification devices 30A, 30B and 30C includes at least one IC tag 301. However, the number of the IC tag 301 is not limited to the above. Two or more IC tags 301 may be provided. Moreover, the number of the identification device 30 of the working vehicle is also appropriately changeable.

In the above exemplary embodiment, the identification devices 30A, 30B and 30C are respectively provided to the filters 20A, 20B and 20C, and the identification device 30D is provided to the engine EG. However, the target component to which the identification device 30 is attached is not limited to the above. The target component to which the identification device 30 may be appropriately changeable or increasable. The identification device 30 may be provided to any component (including any device) configuring the working vehicle irrespective of whether the target component is a replacement component or not.

### INDUSTRIAL APPLICABILITY

The invention is applicable not only to a construction machine such as a hydraulic excavator, a wheel loader, a bulldozer, a motor grader and a dump truck but also to an industrial vehicle such as a forklift.

### EXPLANATION OF CODES

I ···hydraulic excavator (working vehicle), 20 (20A, 20B, 20C)···filter, 30A, 30B ··· identification device (first identification device). 30C, 30D ··· identification device(second identification device), 100···identification information acquisition system , 15A ··· reader (communication device, first communication device), 15B ··· reader (communication device, second communication device), 154···reception judging unit (judging unit), 155···information holder, 158···information transmitter (operational information transmitter, identification information transmitter), 200···communication controller (controller, processor), 5A1···pump room, 5A2···engine room, EG···engine (component).

## Claims

1. An identification information acquisition system provided to a working vehicle, comprising:
a plurality of identification devices; and
a plurality of communication devices that communicate with the plurality of identification devices, wherein
the plurality of identification devices comprise a first communication device and a second communication device, an operation of the second communication device being controlled by the first communication device, and
the first communication device is disposed at a first position and the second communication device is disposed at a second position in the working vehicle, a temperature at the first position being lower than a temperature at the second position.

2. The identification information acquisition system according to claim 1, wherein the working vehicle comprises:
an engine room in which an engine is provided; and
a pump room that is separately provided from the engine room and in which a hydraulic pump is disposed, wherein
the first communication device is disposed in the pump room, and
the second communication device is disposed in the engine room.

3. The identification information acquisition system according to claim 1 or 2, further comprising:
a controller that controls an operation of the first communication device, wherein
the first communication device comprises:
a judging unit that judges whether or not the second communication device is normally operated; and
an operational information transmitter that transmits operational information indicating that the second communication device is not normally operated to the controller when the judging unit judges that the second communication device is not normally operated.

4. The identification information acquisition system according to any one of claims 1 to 3, further comprising:
a processor that processes information acquired by the plurality of communication devices, wherein
the plurality of identification devices comprise:
a first identification device that communicates with the first communication device and holds first identification information; and
a second identification device that communicates with the second communication device and holds second identification information,
the first communication device comprising:
an information holder that holds the first identification information acquired from the first identification device by the first communication device and the second identification information acquired from the second identification device by the second communication device: and
an identification information transmitter that transmits the first identification information and the second identification information held by the information holder to the processor.

5. A working vehicle comprising the identification information acquisition system according to any one of claims 1 to 4.

6. A working vehicle comprising:
an engine room in which an engine is provided;
a pump room that is separately provided from the engine room and in which a hydraulic pump is disposed, a temperature in the pump room being lower than a temperature in the engine room;
a first identification device that holds first identification information;
a second identification device that holds second identification information;
a first communication device that is disposed in the pump room and communicates with the first identification device to acquire the first identification information;
a second communication device that is disposed in the engine room and is controlled by the first communication device and communicates with the second identification device to acquire the second identification information; and
a processor that controls the first communication device and processes the first identification information and the second identification information, wherein
the first communication device comprises:
a judging unit that judges whether or not the second communication device is normally operated;
an operational information transmitter that transmits operational information indicating that the second communication device is not normally operated to the processor when the judging unit judges that the second communication device is not normally operated; and
an identification information transmitter that transmits to the processor the first identification information acquired from the first identification device and the second identification information acquired from the second identification device by the second communication device.
